# EUROPEAN PATENT SPECIFICATION

(11) **EP 3 737 033 B1**
(45) Date of publication and mention of the grant of the patent: **08.12.2021**
(21) Application number: 20165865.5
(22) Date of filing: 26.03.2020
(51) Int. Cl.: H04L 9/32, H04L 9/06

(54) **APPARATUS AND METHOD FOR SHARING DATA**
VORRICHTUNG UND VERFAHREN ZUR GEMEINSAMEN NUTZUNG VON DATEN
APPAREIL ET PROCÉDÉ DE PARTAGE DE DONNÉES

(30) Priority: 08.05.2019 KR 20190053514
(43) Date of publication of application: 11.11.2020
(73) Proprietor: Samsung SDS Co., Ltd., Seoul 05510 (KR)
(72) Inventor: CHOI, Kyu-Young, Seoul 05510 (KR); YOON, Hyo-Jin, Seoul 05510 (KR); SONG, Min-Kang, Seoul 05510 (KR); PARK, Seo-Yeon, Seoul 05510 (KR); CHO, Ji-Hoon, Seoul 05510 (KR)
(74) Representative: Grünecker Patent- und Rechtsanwälte PartG mbB

(56) References cited:
- EP-A2- 1 947 798
- US-A1- 2018 227 130

## Description

### BACKGROUND

### 1. Field

The following description relates to technology for sharing data.

### 2. Description of Related Art

As a blockchain has recently become an issue, there have been active attempts to apply the blockchain to various fields. A blockchain ensures the integrity of data and the technology is being developed through the trust of the data and sharing of the trusted data, in line with the recent trend of sharing economy.

In a conventional blockchain, data is disclosed and hence data privacy cannot be achieved. To solve such a problem, a private blockchain has been introduced. However, even the private blockchain cannot protect data privacy only for a specific entity because all the entities that have joined in a blockchain network share data therebetween.

US 2018/0227130 A1 refers to electronic identification verification methods and systems. A method of certification is disclosed that includes receiving user data at a certification device of a certifying entity, and receiving a registration tx-ID of the data, wherein the registration tx-ID was generated from a blockchain when receiving and storing a signed hash value of the data for registration signed using a private key of the user, wherein the hash value of the data was generated using a registration hash algorithm. The method includes generating a salt that is unique, hashing the data combined with the salt to create generated hashed data, signing the generated hashed data using a private key of the certifying entity to create a signed certification of the data, and transmitting the signed certification of the data to a blockchain for storing. The method further includes receiving a certification tx-ID of the signed certification of the data.

EP 1947798 A2 refers to a method and apparatus using AES CBC for encrypting and decrypting a message and to verify the message integrity by means of MAC.

### Summary

It is the object of the present invention to provide an improved apparatus and method for sharing data.

This object is solved by the subject matter of the independent claims.

Preferred embodiments are defined by the dependent claims.

In one general aspect, there is provided an apparatus for sharing data including a first combined data generator configured to generate first combined data by combining target data to be shared and a random bit string; a data encryptor configured to generate a ciphertext for the first combined data; a key encryptor configured to generate one or more ciphertexts for a decryption key of the ciphertext for the first combined data using one or more public keys; a second combined data generator configured to generate second combined data by combining the ciphertext for the first combined data, the one or more ciphertexts for the decryption key, and the random bit string; and a data discloser configured to disclose the second combined data to one or more entities to share the target data to be shared.

The data encryptor may generate the ciphertext for the first combined data using a symmetric key-based encryption algorithm and the decryption key is identical to an encryption key used to generate the ciphertext for the first combined data.

The one or more public keys may be public keys of each of the one or more entities.

The second combined data generator may generate an electronic signature for the second combined data using a secret key and the data discloser may disclose the second combined data and the electronic signature to the one or more entities.

In another general aspect, there is provided a method of sharing data including generating first combined data by combining target data to be shared and a random bit string; generating a ciphertext for the first combined data; generating one or more ciphertexts for a decryption key of the ciphertext for the first combined data using one or more public keys; generating second combined data by combining the ciphertext for the first combined data, the one or more ciphertexts for the decryption key, and the random bit string; and disclosing the second combined data to one or more entities to share the target data to be shared.

The generating of the ciphertext for the first combined data may include generating the ciphertext for the first combined data using a symmetric key-based encryption algorithm and the decryption key is identical to an encryption key used to generate the ciphertext for the first combined data.

The one or more public keys may be public keys of each of the one or more entities.

The generating of the second combined data may include generating an electronic signature for the second combined data using a secret key and the disclosing of the second combined data may include disclosing the second combined data and the electronic signature to the one or more entities.

In still another general aspect, there is provided an apparatus for sharing data including a data acquirer configured to acquire second combined data in which a ciphertext for first combined data in which target data to be shared and a first random bit string are combined, one or more ciphertexts for a decryption key of the ciphertext for the first combined data, and a second random bit string are combined; a key decryptor configured to use a secret key to decrypt a ciphertext encrypted using a public key that corresponds to the secret key from among the one or more ciphertexts for the decryption key and acquire the decryption key; data decryptor configured to use the acquired decryption key to decrypt the ciphertext for the first combined data and acquire the target data to be shared and the first random bit string; and a data verifier configured to verify the target data to be shared on the basis of the first random bit string and the second random bit string.

The data acquirer may acquire the second combined data and an electronic signature for the second combined data and verify the electronic signature for the second combined data using a public key of an entity that has disclosed the second combined data.

The one or more ciphertexts for the decryption key may be ciphertexts encrypted using public keys of each of entities to share the target data to be shared.

The data verifier may determine that the target data to be shared is verified when the first random bit string is identical to the second random bit string.

In yet another general aspect, there is provided a method of sharing data including acquiring second combined data in which a ciphertext for first combined data in which target data to be shared and a first random bit string are combined, one or more ciphertexts for a decryption key of the ciphertext for the first combined data, and a second random bit string are combined; using a secret key to decrypt a ciphertext encrypted using a public key that corresponds to the secret key from among the one or more ciphertexts for the decryption key and acquiring the decryption key; decrypting the ciphertext for the first combined data using the acquired decryption key and acquiring the target data to be shared and the first random bit string; and verifying the target data to be shared on the basis of the first random bit string and the second random bit string.

The acquiring of the second combined data may include acquiring the second combined data and an electronic signature for the second combined data and verifying the electronic signature for the second combined data by using a public key of an entity that has disclosed the second combined data.

The one or more ciphertexts for the decryption key may be ciphertexts encrypted using public keys of each of the one or more entities to share the target data to be shared.

The verifying of the target data to be shared may include determining that the target data to be shared is verified when the first random bit string is identical to the second random bit string.

Other features and aspects will be apparent from the following detailed description, the drawings, and the claims.

### BRIEF DESCRIPTION OF THE DRAWINGS

FIG. 1 is a diagram illustrating a configuration of a data sharing system according to one embodiment.
FIG. 2 is a diagram illustrating a configuration of a data sharing apparatus for sharing data according to one embodiment.
FIG. 3 is a diagram illustrating a configuration of a data sharing apparatus for sharing data according to another embodiment.
FIG. 4 is a diagram illustrating an example in which data is shared in a blockchain network according to one embodiment.
FIG. 5 is a flowchart illustrating a method of sharing data according to one embodiment.
FIG. 6 is a flowchart illustrating a method of sharing data according to another embodiment.
FIG. 7 is a block diagram for describing a computing environment including a computing device suitable to be used in exemplary embodiments.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes and modifications of the methods, apparatuses, and/or systems described herein will be suggested to those of ordinary skill in the art.

Descriptions of well-known functions and constructions may be omitted for increased clarity and conciseness. Also, terms described in below are selected by considering functions in the embodiment and meanings may vary depending on, for example, a user or operator's intentions or customs. Therefore, definitions of the terms should be made on the basis of the overall context. The terminology used in the detailed description is provided only to describe embodiments of the present disclosure and not for purposes of limitation. Unless the context clearly indicates otherwise, the singular forms include the plural forms. It should be understood that the terms "comprises" or "includes" specify some features, numbers, steps, operations, elements, and/or combinations thereof when used herein, but do not preclude the presence or possibility of one or more other features, numbers, steps, operations, elements, and/or combinations thereof in addition to the description.

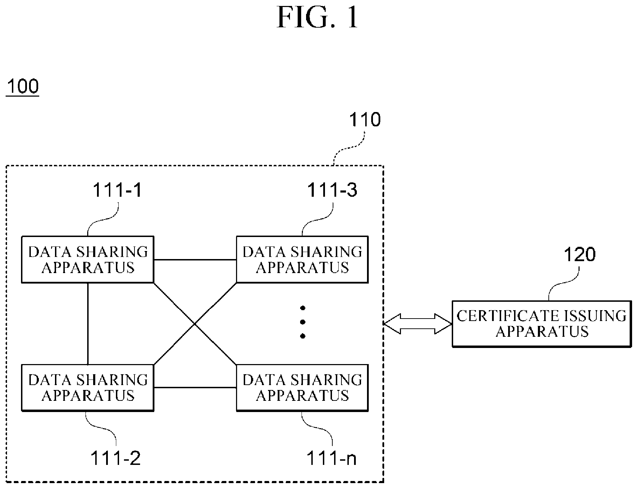

FIG. 1 is a diagram illustrating a configuration of a data sharing system 100 according to one embodiment.

Referring to FIG. 1, the data sharing system 100 includes a plurality of data sharing apparatuses 111-1, 111-2, 111-3, and 111-n for sharing data and a certificate issuing apparatus 120 for issuing a certificate.

The plurality of data sharing apparatuses 111-1, 111-2, 111-3, and 111-n may refer to apparatuses used by each of a plurality of entities participating in a data sharing network 110, such as a blockchain. The plurality of data sharing apparatuses 111-1, 111-2, 111-3, and 111-n may be apparatuses to share encrypted data therebetween using a wired/wireless communication network and may be implemented as various forms of devices, such as, a personal computer (PC), a tablet PC, a smartphone, and the like.

Each of the apparatuses 111-1, 111-2, 111-3, and 111-n for sharing data may generate a secret key and a public key of each entity according to a key generation scheme of a public key-based encryption algorithm. In this case, each of the apparatuses 111-1, 111-2, 111-3, and 111-n for sharing data may safely store the secret key therein and publicly reveal the public key.

Also, each of the data sharing apparatuses 111-1, 111-2, 111-3, and 111-n may provide the public key of each entity to the certificate issuing apparatus 120 using the wired/wireless communication network and may receive a certificate for the public key of each entity issued from the certificate issuing apparatus 120.

The certificate issuing apparatus 120 may refer to an apparatus used by a certification authority or a certification entity that confirms the guarantee of an association between the public key of each entity and the entity that has generated the corresponding public key. Specifically, the certificate issuing apparatus 120 may issue a certificate for the public key of each entity provided from the plurality of the data sharing apparatuses 111-1, 111-2, 111-3, and 111-n. In this case, the certificate for the public key may be information which the certificate issuing apparatus 120 generates by signing with the public key using the secret key of the certificate issuing apparatus 120.

In addition, the certificate issuing apparatus 120 may publicly disclose the issued certificate for the public key of each entity. Accordingly, each of the data sharing apparatuses 111-1, 111-2, 111-3, and 111-n is able to easily obtain the certificate for the public key of other entity from the certificate issuing apparatus 120.

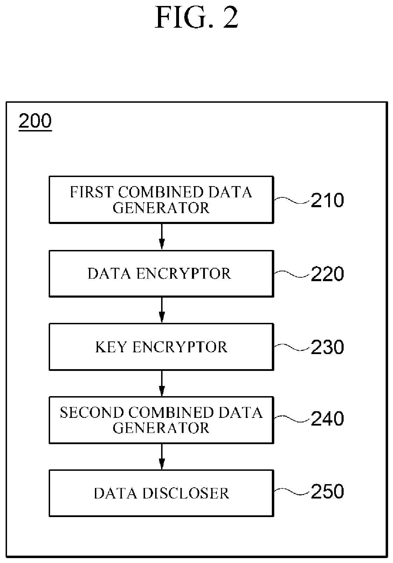

FIG. 2 is a diagram illustrating a configuration of a data sharing apparatus 200 for sharing data according to one embodiment.

Referring to FIG. 2, the data sharing apparatus 200 includes a first combined data generator 210, a data encryptor 220, a key encryptor 230, a second combined data generator 240, and a data discloser 250.

The first combined data generator 210 generates first combined data by combining target data to be shared and a random bit string.

In this case, the target data to be shared may mean data that an entity intends to share with one or more other entities.

The random bit string may be information in which bits are enumerated in an arbitrary order. In this case, the random bit string may be set by an entity that intends to share the target data to be shared or may be information arbitrarily that is generated by the data sharing apparatus 200 used by the corresponding entity.

The data encryptor 220 generates a ciphertext for the first combined data.

According to one embodiment, the data encryptor 220 may generate a ciphertext for the first combined data using a symmetric key-based encryption algorithm, such as the advanced encryption standard (AES) algorithm, the data encryption standard (DES) algorithm, or the like, in which an encryption key used for encrypting a plaintext is the same as a decryption key of a ciphertext encrypted using the corresponding encryption key.

The key encryptor 230 generates one or more ciphertexts for a decryption key of ciphertext for the first combined data by using one or more public keys. In this case, the one or more public keys may be public keys of each of one or more entities to share the target data to be shared.

Specifically, the key encryptor 230 may acquire the one or more public keys disclosed by each of the one or more entities to share the target data to be shared. Then, the key encryptor 230 may use each of the obtained public keys of each of the one or more entities to generate one or more ciphertexts. In this case, the one or more ciphertexts may be generated using a public key-based encryption algorithm that uses public keys of each of one or more entities as encryption keys.

The number of ciphertexts generated by the key encryptor 230 may be equal to the number of entities to share the target data to be shared.

According to one embodiment, the key encryptor 230 may verify the public key of each of one or more entities. Specifically, the key encryptor 230 may acquire certificates for each of the one or more entities and a public key of a certificate issuing apparatus 120 from the certificate issuing apparatus 120. Also, the key encryptor 230 may verify the certificates for the public keys for each of the one or more entities using the public key of the certificate issuing apparatus 120.

Accordingly, the key encryptor 230 may confirm the assurance of the certificate issuing apparatus 120 on an association between the one or more public key and the entities that have generated each of the public keys. Then, the key encryptor 230 may generate one or more ciphertexts for a decryption key using the public keys of the one or more entities when verification for the certificate is completed.

The second combined data generator 240 generates second combined data by combining the ciphertext for the first combined data, one or more ciphertexts for a decryption key, and a random bit string. In this case, the random bit string used to generate the second combined data is the same as the random bit string used to generate the first combined data.

In addition, the second combined data generator 240 may generate an electronic signature for the second combined data using a secret key.

Specifically, the second combined data generator 240 may generate the electronic signature for the second combined data using the secret key of an entity to disclose the target data to be shared.

The data discloser 250 discloses the second combined data to one or more entities to share the target data to be shared.

Additionally, according to one embodiment, the data discloser 250 may disclose the electronic signature for the second combined data together with the second combined data to one or more entities.

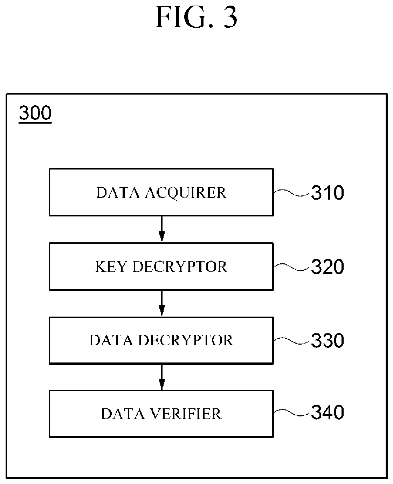

FIG. 3 is a diagram illustrating a configuration of a data sharing apparatus 300 for sharing data according to another embodiment.

Referring to FIG. 3, the data sharing apparatus 300 includes a data acquirer 310, a key decryptor 320, a data decryptor 330, and a data verifier 340.

The data acquirer 310 acquires second combined data in which a ciphertext for first combined data in which target data to be shared and a first random bit string are combined, one or more ciphertexts for a decryption key of the ciphertext for the first combined data, and a second random bit string are combined.

In this case, the one or more ciphertexts for the decryption key may be a ciphertext that is encrypted using public keys of each of entities to share the target data to be shared.

Also, the data acquirer 310 may extract and acquire the ciphertext for the first combined data, the one or more ciphertexts for the decryption key, and the second random bit string from the second combined data.

According to one embodiment, the data acquirer 310 may acquire the second combined data and an electronic signature for the second combined data and verify the electronic signature for the second combined data using a public key for the entity that has disclosed the second combined data. In this case, the electronic signature for the second combined data may be information in which the second combined data is signed using a secret key of the entity that has disclosed the second combined data.

According to one embodiment, the data acquirer 310 may verify the public key of the entity that has disclosed the second combined data. Specifically, the data acquirer 310 may acquire both a certificate for the public key of the entity that has disclosed the second combined data and a public key of a certificate issuing apparatus 120 from the certificate issuing apparatus 120. Then, the data acquirer 310 may use the public key of the certificate issuing apparatus 120 to verify the certificate for the public key of the entity that has disclosed the second combined data.

Accordingly, the data acquirer 310 may confirm the assurance of the certificate issuing apparatus 120 on an association between the entity that has disclosed the second combined data and the public key of the entity that has disclosed the second combined data.

The key decryptor 320 acquires the decryption key by decrypting a ciphertext that is encrypted using a public key that corresponds to the secret key from among the one or more ciphertexts for the decryption key.

In this case, the one or more ciphertexts for the decryption key may be decrypted using a public key-based encryption algorithm that uses secret keys of each of one or more entities as decryption keys. That is, the key decryptor 320 may use a secret key of an entity intending to acquire the target data to be shared to decrypt a ciphertext that is encrypted by a public key paired with the secret key of the entity intending to acquire the target data from among the ciphertexts for the decryption key, thereby acquiring the decryption key.

The data decryptor 330 uses the acquired decryption key to decrypt a ciphertext for the first combined data and acquires the target data to be shared and the first random bit string.

The data decryptor 330 may decrypt the ciphertext for the first combined data using a symmetric key-based encryption algorithm, such as AES algorithm, DES algorithm, or the like, in which an encryption key used for encrypting a plaintext is the same as a decryption key of a ciphertext encrypted using the corresponding encryption key.

Specifically, the data decryptor 330 may use the acquired decryption key to decrypt the ciphertext for the first combined data and acquire the first combined data. Also, the data decryptor 330 may extract and acquire the target data to be shared and the first random bit string from the acquired first combined data.

The data verifier 340 verifies the target data to be shared on the basis of the first random bit string and the second random bit string.

Specifically, the data verifier 340 may verify the target data to be shared on the basis of the first random bit string extracted from the first combined data and the second random bit string extracted from the second combined data.

According to one embodiment, the data verifier 340 may determine that the target data to be shared is verified when the first random bit string is identical to the second random bit string.

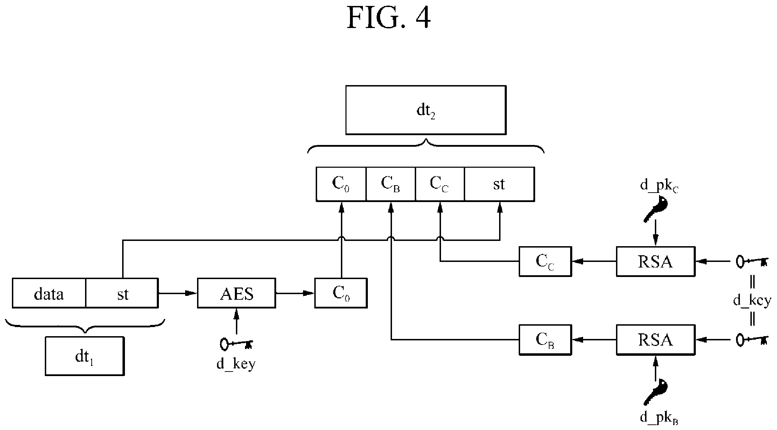

FIG. 4 is a diagram illustrating an example in which data is shared in a blockchain network according to one embodiment.

Referring to FIG. 4, it is assumed that entity A among a plurality of entities participating in a blockchain network intends to disclose transaction data obtainable only by entity B and entity C in the blockchain network.

First, a data sharing apparatus 200 for sharing data acquires certificates for each public key d_pk_{B} and d_pk_{C} of each of entities B and C from a certificate issuing apparatus 120.

Then, the data sharing apparatus 200 uses a public key of the certificate issuing apparatus 120 to verify the certificates for each public key d_pk_{B} and d_pk_{C} of each of entities B and C.

After the verification of the certificates for the public keys d_pk_{B} and d_pk_{C} of entities B and C is completed, the data sharing apparatus 200 generates first combined data dt₁ = data∥st by combining target data to be shared and a random bit string st selected by entity A.

Then, the data sharing apparatus 200 uses an encryption key d_key of entity A to generate ciphertext C₀ = ENC(d_key, dt₁) for the first combined data dt₁.

In this case, the generation of the ciphertext C₀ for the first combined data may be performed using a symmetric key-based encryption algorithm, such as AES algorithm, DES algorithm, or the like, in which an encryption key used for encrypting plaintext is identical to a decryption key of a ciphertext encrypted using the corresponding encryption key.

Then, the data sharing apparatus 200 uses each of the public keys d_pk_{B} and d_pk_{C} of each of entities B and C to generate one or more ciphertexts C_{B} = ENC(d_pk_{B}, d_key) and C_{C} = ENC(d_pk_{C}, d_key) for a decryption key d_key of the ciphertext C₀ for the first combined data. In this case, the decryption key d_key is identical to the encryption key d_key used to generate the ciphertext for the first combined data.

Meanwhile, the generation of the one or more ciphertexts C_{B} and C_{C} for the decryption key may be performed through an encryption algorithm, such as Rivest-Shamir-Adleman (RSA) algorithm or the like.

Then, the data sharing apparatus 200 generates second combined data dt₂ = C₀∥C_{B}∥C_{C}∥st by combining the ciphertext C₀ for the first combined data, the one or more ciphertexts C_{B} and C_{C} for the decryption key, and the random bit string st used to generate the first combined data.

Then, the data sharing apparatus 200 uses a secret key s_sk_{A} of entity A to generate an electronic signature X = SIGN(s_sk_{A}, dt₂) for the second combined data.

Then, the data sharing apparatus 200 discloses the second combined data dt₂ and the electronic signature X for the second combined data to entity B and entity C.

The subsequent process is the same as the process performed in the existing private blockchain.

Meanwhile, it is assumed that entity B and entity C intend to acquire the transaction data disclosed by entity A in the blockchain network.

First, the data sharing apparatus 300 acquires a certificate for a public key s_pk_{A} of entity A from the certificate issuing apparatus 120.

Then, the data sharing apparatus 300 verifies the certificate for the public key s_pk_{A} of entity A using the public key of the certificate issuing apparatus 120.

When the verification of the certificate for the public key s_pk_{A} of entity A is complete, the data sharing apparatus 300 acquires the second combined data dt2 disclosed by entity A and the electronic signature X for the second combined data.

Then, the data sharing apparatus 300 verifies the electronic signature X for the second combined data using the public key s_pk_{A} of entity A (Verify(s_pk_{A}, X)).

At this time, the data sharing apparatus 300 acquires the ciphertext C₀ for the first combined data, the one or more ciphertexts C_{B} and Cc for the decryption key for the first combined data, and the second random bit string st₂ from the second combined data dt₂.

Then, the data sharing apparatus 300 uses a secret key to decrypt a ciphertext encrypted using a public key that corresponds to the secret key from among the one or more ciphertexts.

Specifically, in the case of entity B, the data sharing apparatus 300 uses a secret key d_sk_{B} of entity B to decrypt the ciphertext C_{B} for a decryption key encrypted using the public key d_pk_{B} corresponding to the secret key d_sk_{B} of entity B. Also, in the case of entity C, the data sharing apparatus 300 uses a secret key d_sk_{C} of entity C to decrypt the ciphertext C_{C} for a decryption key encrypted using the public key d_pk_{C} corresponding to the secret key d_sk_{C} of entity C.

In this case, the data sharing apparatus 300 acquires a decryption key d_key = DEC(d_sk_{B}, C_{B}), DEC(d_sk_{C}, C_{C}) by decrypting the ciphertext for the decryption key.

Thereafter, the data sharing apparatus 300 uses the decryption key d_key to decrypt the ciphertext C₀ for the first combined data and acquires the first combined data dt₁ = DEC(d_key, C₀).

In this case, the decryption of the ciphertext C₀ for the first combined data may be performed using a symmetric key-based encryption algorithm, such as AES algorithm, DES algorithm, or the like, in which an encryption key used for encrypting a plaintext is identical to a decryption key of a ciphertext encrypted using the corresponding encryption key.

Then, the data sharing apparatus 300 acquires the target data to be shared and the first random bit string st₁ from the acquired first combined data dt₁.

Then, the data sharing apparatus 300 determines that the target data to be shared is verified when the first random bit string st₁ is identical to the second random bit string st₂.

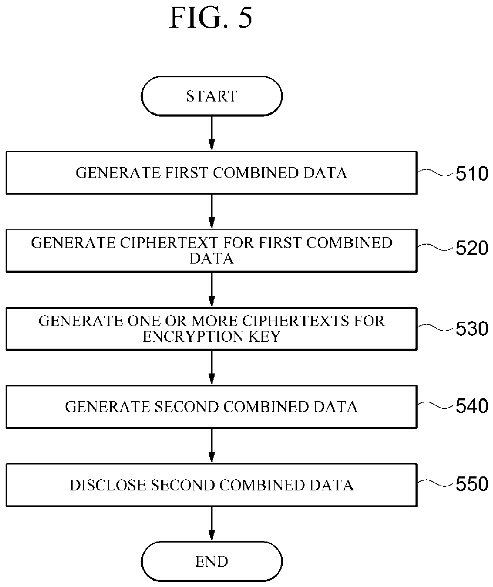

FIG. 5 is a flowchart illustrating a method of sharing data according to one embodiment.

The method illustrated in FIG. 5 may be performed by the data sharing apparatus 200 shown in FIG. 2.

Referring to FIG. 5, the data sharing apparatus 200 generates first combined data by combining target data to be shared and a random bit string (510).

Then, the data sharing apparatus 200 generates a ciphertext for the first combined data (520).

In this case, the data sharing apparatus 200 may use a symmetric key-based encryption algorithm to generate the ciphertext for the first combined data.

Then, the data sharing apparatus 200 uses one or more public keys to generate one or more ciphertexts for a decryption key of the ciphertext for the first combined data (530).

Then, the data sharing apparatus 200 generates second combined data by combining the ciphertext for the first combined data, the one or more ciphertexts for the decryption key, and a random bit string (540).

In this case, the data sharing apparatus 200 may generate an electronic signature for the second combined data using a secret key.

Then, the data sharing apparatus 200 discloses the second combined data to one or more entities to share the target data to be shared (550).

In this case, the data sharing apparatus 200 may disclose the second combined data and the electronic signature to one or more entities.

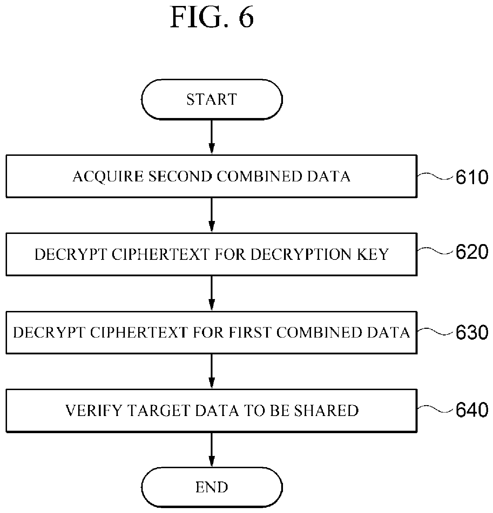

FIG. 6 is a flowchart illustrating a method of sharing data according to another embodiment.

The method illustrated in FIG. 6 may be performed by the data sharing apparatus 300 shown in FIG. 3.

Referring to FIG. 6, the data sharing apparatus 300 acquires second combined data in which a ciphertext for first combined data in which target data to be shared and a first random bit string are combined, one or more ciphertexts for a decryption key of the ciphertext for the first combined data, and a second random bit string are combined (610).

In this case, the data sharing apparatus 300 may acquire the second combined data and an electronic signature for the second combined data.

Also, the data sharing apparatus 300 may verify the electronic signature for the second combined data using a public key of an entity that has disclosed the second combined data.

Then, the data sharing apparatus 300 uses a secret key to decrypt a ciphertext encrypted using a public key that corresponds to the secret key from among the one or more ciphertexts for the decryption key and acquires the decryption key (620). Then, the data sharing apparatus 300 uses the acquired decryption key to decrypt the ciphertext for the first combined data and acquires the target data to be shared and the first random bit string (630).

Then, the data sharing apparatus 300 verifies the target data to be shared on the basis of the first random bit string and the second random bit string (640).

In this case, the data sharing apparatus 300 may determine that the target data to be shared is verified when the first random bit string is identical to the second random bit string.

Meanwhile, in the flowcharts illustrated in FIGS. 5 and 6, the method is described as being divided into a plurality of operations. However, it should be noted that at least some of the operations may be performed in different order or may be combined into fewer operations or further divided into more operations. In addition, some of the operations may be omitted, or one or more extra operations, which are not illustrated, may be added to the flowchart and be performed.

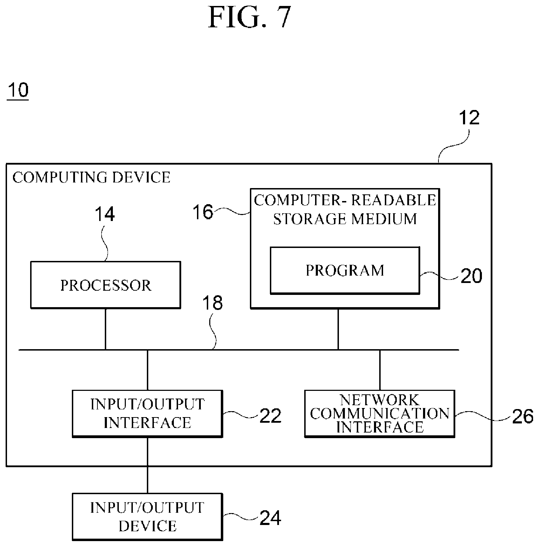

FIG. 7 is a block diagram for describing a computing environment including a computing device suitable to be used in exemplary embodiments. In the illustrated embodiments, each of the components may have functions and capabilities different from those described hereinafter and additional components may be included in addition to the components described herein.

The illustrated computing environment 10 includes a computing device 12. In one embodiment, the computing device 12 may be one or more components included in, for example, the data sharing apparatuses 200 and 300 illustrated in FIGS. 2 and 3.

The computing device 12 may include at least one processor 14, a computer-readable storage medium 16, and a communication bus 18. The processor 14 may cause the computing device 12 to operate according to the above-described exemplary embodiment. For example, the processor 14 may execute one or more programs stored in the computer-readable storage medium 16. The one or more programs may include one or more computer executable commands, and the computer executable commands may be configured to, when executed by the processor 14, cause the computing device 12 to perform operations according to the exemplary embodiment.

The computer readable storage medium 16 is configured to store computer executable commands and program codes, program data and/or information in other suitable forms. The program 20 stored in the computer readable storage medium 16 may include a set of commands executable by the processor 14. In one embodiment, the computer readable storage medium 16 may be a memory (volatile memory, such as random access memory (RAM), non-volatile memory, or a combination thereof), one or more magnetic disk storage devices, optical disk storage devices, flash memory devices, storage media in other forms capable of being accessed by the computing device 12 and storing desired information, or a combination thereof.

The communication bus 18 connects various other components of the computing device 12 including the processor 14 and the computer readable storage medium 16.

The computing device 12 may include one or more input/output interfaces 22 for one or more input/output devices 24 and one or more network communication interfaces 26. The input/output interface 22 and the network communication interface 26 are connected to the communication bus 18. The input/output device 24 may be connected to other components of the computing device 12 through the input/output interface 22. The illustrative input/output device 24 may be a pointing device (a mouse, a track pad, or the like), a keyboard, a touch input device (a touch pad, a touch screen, or the like), an input device, such as a voice or sound input device, various types of sensor devices, and/or a photographing device, and/or an output device, such as a display device, a printer, a speaker, and/or a network card. The illustrative input/output device 24, which is one component constituting the computing device 12, may be included inside the computing device 12 or may be configured as a device separate from the computing device 12 and be connected to the computing device 12.

According to the disclosed embodiments, data is shared using a public key and a secret key of an entity to share the data so that only some intended entities among entities on a data sharing network, such as a blockchain, can confirm and verify the data on the network.

Also, according to the disclosed embodiments, data is verified using a first random bit string included in first combined data and a second random bit string included in second combined data, so that identity of an entity that has generated and protected data and an entity that signs a signature can be ensured, thereby preventing loss of reliability of a data sharing network, such as a blockchain.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components. Accordingly, other implementations are within the scope of the following claims.

## Claims

1. An apparatus for sharing data, comprising:
a first combined data generator (210) configured to generate first combined data by combining target data to be shared and a random bit string;
a data encryptor (220) configured to generate a ciphertext for the first combined data;
a key encryptor (230) configured to generate one or more ciphertexts for a decryption key of the ciphertext for the first combined data using one or more public keys;
a second combined data generator (240) configured to generate second combined data by combining the ciphertext for the first combined data, the one or more ciphertexts for the decryption key, and the random bit string; and
a data discloser (250) configured to disclose the second combined data to one or more entities to share the target data to be shared.

2. The apparatus of claim 1, wherein the data encryptor (220) is configured to generate the ciphertext for the first combined data using a symmetric key-based encryption algorithm and the decryption key is identical to an encryption key used to generate the ciphertext for the first combined data.

3. The apparatus of claim 1, wherein the one or more public keys are public keys of each of the one or more entities.

4. The apparatus of claim 1, wherein the second combined data generator (240) is configured to generate an electronic signature for the second combined data using a secret key and the data discloser (250) is configured to disclose the second combined data and the electronic signature to the one or more entities.

5. A method of sharing data, comprising:
generating (510) first combined data by combining target data to be shared and a random bit string;
generating (520) a ciphertext for the first combined data;
generating (530) one or more ciphertexts for a decryption key of the ciphertext for the first combined data using one or more public keys;
generating (540) second combined data by combining the ciphertext for the first combined data, the one or more ciphertexts for the decryption key, and the random bit string; and
disclosing (550) the second combined data to one or more entities to share the target data to be shared.

6. The method of claim 5, wherein the generating (520) of the ciphertext for the first combined data comprises generating the ciphertext for the first combined data using a symmetric key-based encryption algorithm, and the decryption key is identical to an encryption key used to generate the ciphertext for the first combined data, and the one or more public keys are public keys of each of the one or more entities.

7. The method of claim 5, wherein the generating (540) of the second combined data comprises generating an electronic signature for the second combined data using a secret key and the disclosing of the second combined data comprises disclosing the second combined data and the electronic signature to the one or more entities.

8. An apparatus for sharing data, comprising:
a data acquirer (310) configured to acquire second combined data in which a ciphertext for first combined data in which target data to be shared and a first random bit string are combined, one or more ciphertexts for a decryption key of the ciphertext for the first combined data, and a second random bit string are combined;
a key decryptor (320) configured to use a secret key to decrypt a ciphertext encrypted using a public key that corresponds to the secret key from among the one or more ciphertexts for the decryption key and acquire the decryption key;
data decryptor (330) configured to use the acquired decryption key to decrypt the ciphertext for the first combined data and acquire the target data to be shared and the first random bit string; and
a data verifier (340) configured to verify the target data to be shared on the basis of the first random bit string and the second random bit string.

9. The apparatus of claim 8, wherein the data acquirer is configured to acquire the second combined data and an electronic signature for the second combined data and verify the electronic signature for the second combined data using a public key of an entity that has disclosed the second combined data.

10. The apparatus of claim 8, wherein the one or more ciphertexts for the decryption key are ciphertexts encrypted using public keys of each of entities to share the target data to be shared.

11. The apparatus of claim 8, wherein the data verifier is configured to determine that the target data to be shared is verified when the first random bit string is identical to the second random bit string.

12. A method of sharing data, comprising:
acquiring (610) second combined data in which a ciphertext for first combined data in which target data to be shared and a first random bit string are combined, one or more ciphertexts for a decryption key of the ciphertext for the first combined data, and a second random bit string are combined;
using a secret key to decrypt (620) a ciphertext encrypted using a public key that corresponds to the secret key from among the one or more ciphertexts for the decryption key and acquiring the decryption key;
decrypting (630) the ciphertext for the first combined data using the acquired decryption key and acquiring the target data to be shared and the first random bit string; and
verifying (640) the target data to be shared on the basis of the first random bit string and the second random bit string.

13. The method of claim 12, wherein the acquiring (610) of the second combined data comprises acquiring the second combined data and an electronic signature for the second combined data and verifying the electronic signature for the second combined data by using a public key of an entity that has disclosed the second combined data.

14. The method of claim 12, wherein the one or more ciphertexts for the decryption key are ciphertexts encrypted using public keys of each of the one or more entities to share the target data to be shared.

15. The method of claim 12, wherein the verifying (640) of the target data to be shared comprises determining that the target data to be shared is verified when the first random bit string is identical to the second random bit string.

## Patentansprüche

1. Vorrichtung zur gemeinsamen Nutzung von Daten, umfassend:
einen ersten Generator für kombinierte Daten (210), der dazu konfiguriert ist, erste kombinierte Daten durch Kombinieren von gemeinsam zu nutzenden Zieldaten und einer Zufallsbitfolge zu erzeugen;
einen Datenverschlüsseler (220), der dazu konfiguriert ist, einen Chiffretext für die ersten kombinierten Daten zu erzeugen;
einen Schlüsselverschlüsseler (230), der dazu konfiguriert ist, einen oder mehrere Chiffretexte für einen Entschlüsselungsschlüssel des Chiffretextes für die ersten kombinierten Daten unter Verwendung eines oder mehrerer öffentlicher Schlüssel zu erzeugen;
einen zweiten Generator für kombinierte Daten (240), der dazu konfiguriert ist, zweite kombinierte Daten durch Kombinieren des Chiffretextes für die ersten kombinierten Daten, der einen oder mehreren Chiffretexte für den Entschlüsselungsschlüssel und der Zufallsbitfolge zu erzeugen; und
einen Datenoffenleger (250), der dazu konfiguriert ist, die zweiten kombinierten Daten an eine oder mehrere Entitäten weiterzugeben, um die gemeinsam zu nutzenden Zieldaten zu teilen.

2. Vorrichtung nach Anspruch 1, wobei der Datenverschlüsseler (220) dazu konfiguriert ist, den Chiffretext für die ersten kombinierten Daten unter Verwendung eines auf einem symmetrischen Schlüssel basierenden Verschlüsselungsalgorithmus zu erzeugen und wobei der Entschlüsselungsschlüssel mit einem Verschlüsselungsschlüssel identisch ist, der zur Erzeugung des Chiffretextes für die ersten kombinierten Daten verwendet wird.

3. Vorrichtung nach Anspruch 1, wobei die einen oder mehreren öffentlichen Schlüssel die öffentlichen Schlüssel jeder der einen oder mehreren Entitäten sind.

4. Vorrichtung nach Anspruch 1, wobei der zweite Generator für kombinierte Daten (240) dazu konfiguriert ist, eine elektronische Signatur für die zweiten kombinierten Daten unter Verwendung eines geheimen Schlüssels zu erzeugen, und der Datenoffenleger (250) dazu konfiguriert ist, die zweiten kombinierten Daten und die elektronische Signatur gegenüber den einen oder mehreren Entitäten offenzulegen.

5. Verfahren zur gemeinsamen Nutzung von Daten, umfassend:
Erzeugen (510) von ersten kombinierten Daten durch Kombinieren von gemeinsam zu nutzenden Zieldaten und einer Zufallsbitfolge;
Erzeugen (520) eines Chiffretextes für die ersten kombinierten Daten;
Erzeugen (530) von einem oder mehreren Chiffretexten für einen Entschlüsselungsschlüssel des Chiffretextes für die ersten kombinierten Daten unter Verwendung eines oder mehrerer öffentlicher Schlüssel;
Erzeugen (540) von zweiten kombinierten Daten durch Kombinieren des Chiffretextes für die ersten kombinierten Daten, der einen oder mehreren Chiffretexte für den Entschlüsselungsschlüssel und der Zufallsbitfolge; und
Offenlegen (550) der zweiten kombinierten Daten an eine oder mehrere Entitäten, um die gemeinsam zu nutzenden Zieldaten zu teilen.

6. Verfahren nach Anspruch 5, wobei das Erzeugen (520) des Chiffretextes für die ersten kombinierten Daten das Erzeugen des Chiffretextes für die ersten kombinierten Daten unter Verwendung eines auf einem symmetrischen Schlüssel basierenden Verschlüsselungsalgorithmus umfasst und der Entschlüsselungsschlüssel mit einem Verschlüsselungsschlüssel identisch ist, der zum Erzeugen des Chiffretextes für die ersten kombinierten Daten verwendet wird, und die einen oder mehreren öffentlichen Schlüssel öffentliche Schlüssel von jeder der einen oder mehreren Entitäten sind.

7. Verfahren nach Anspruch 5, wobei das Erzeugen (540) der zweiten kombinierten Daten das Erzeugen einer elektronischen Signatur für die zweiten kombinierten Daten unter Verwendung eines geheimen Schlüssels umfasst und das Offenlegen der zweiten kombinierten Daten das Offenlegen der zweiten kombinierten Daten und der elektronischen Signatur gegenüber den einen oder mehreren Entitäten umfasst.

8. Vorrichtung zur gemeinsamen Nutzung von Daten, umfassend:
einen Datenerfasser (310), der dazu konfiguriert ist, zweite kombinierte Daten zu erfassen, in denen ein Chiffretext für erste kombinierte Daten, in welchen gemeinsam zu nutzende Zieldaten und eine erste Zufallsbitfolge kombiniert sind, ein oder mehrere Chiffretexte für einen Entschlüsselungsschlüssel des Chiffretextes für die ersten kombinierten Daten und eine zweite Zufallsbitfolge kombiniert sind;
einen Schlüsselentschlüsseler (320), der dazu konfiguriert ist, einen geheimen Schlüssel zu verwenden, um einen Chiffretext zu entschlüsseln, der unter Verwendung eines öffentlichen Schlüssels verschlüsselt wurde, welcher dem geheimen Schlüssel aus den einen oder mehreren Chiffretexten für den Entschlüsselungsschlüssel entspricht, und den Entschlüsselungsschlüssel zu erfassen;
einen Datenentschlüsseler (330), der dazu konfiguriert ist, den erfassten Entschlüsselungsschlüssel zu verwenden, um den Chiffretext für die ersten kombinierten Daten zu entschlüsseln und die gemeinsam zu nutzenden Zieldaten und die erste Zufallsbitfolge zu erfassen; und
einen Datenverifizierer (340), der dazu konfiguriert ist, die gemeinsam zu nutzenden Zieldaten auf der Grundlage der ersten Zufallsbitfolge und der zweiten Zufallsbitfolge zu verifizieren.

9. Vorrichtung nach Anspruch 8, wobei der Datenerfasser dazu konfiguriert ist, die zweiten kombinierten Daten und eine elektronische Signatur für die zweiten kombinierten Daten zu erfassen und die elektronische Signatur für die zweiten kombinierten Daten unter Verwendung eines öffentlichen Schlüssels einer Entität zu verifizieren, welche die zweiten kombinierten Daten offengelegt hat.

10. Vorrichtung nach Anspruch 8, wobei es sich bei den einen oder mehreren Chiffretexten für den Entschlüsselungsschlüssel um Chiffretexte handelt, die unter Verwendung öffentlicher Schlüssel jeder der Entitäten verschlüsselt sind, um die gemeinsam zu nutzenden Zieldaten zu teilen.

11. Vorrichtung nach Anspruch 8, wobei der Datenverifizierer zum Bestimmen konfiguriert ist, dass die gemeinsam zu nutzenden Zieldaten verifiziert sind, wenn die erste Zufallsbitfolge mit der zweiten Zufallsbitfolge identisch ist.

12. Verfahren zur gemeinsamen Nutzung von Daten, umfassend:
Erfassen (610) von zweiten kombinierten Daten, in denen ein Chiffretext für erste kombinierte Daten, in welchen gemeinsam zu nutzende Zieldaten und eine erste Zufallsbitfolge kombiniert sind, ein oder mehrere Chiffretexte für einen Entschlüsselungsschlüssel des Chiffretextes für die ersten kombinierten Daten und eine zweite Zufallsbitfolge kombiniert sind;
Verwenden (620) eines geheimen Schlüssels, um einen Chiffretext zu entschlüsseln, der unter Verwendung eines öffentlichen Schlüssels verschlüsselt wurde, welcher dem geheimen Schlüssel aus den einen oder mehreren Chiffretexten für den Entschlüsselungsschlüssel entspricht, und Erfassen des Entschlüsselungsschlüssels;
Entschlüsseln (630) des Chiffretextes für die ersten kombinierten Daten unter Verwendung des erfassten Entschlüsselungsschlüssels und Erfassen der gemeinsam zu nutzenden Zieldaten und der ersten Zufallsbitfolge; und
Verifizieren (640) der gemeinsam zu nutzenden Zieldaten auf der Grundlage der ersten Zufallsbitfolge und der zweiten Zufallsbitfolge.

13. Verfahren nach Anspruch 12, wobei das Erfassen (610) der zweiten kombinierten Daten das Erfassen der zweiten kombinierten Daten und einer elektronischen Signatur für die zweiten kombinierten Daten sowie das Verifizieren der elektronischen Signatur für die zweiten kombinierten Daten unter Verwendung eines öffentlichen Schlüssels einer Entität umfasst, welche die zweiten kombinierten Daten offengelegt hat.

14. Verfahren nach Anspruch 12, wobei es sich bei den einen oder mehreren Chiffretexten für den Entschlüsselungsschlüssel um Chiffretexte handelt, die unter Verwendung öffentlicher Schlüssel jeder der einen oder mehreren Entitäten verschlüsselt sind, um die gemeinsam zu nutzenden Zieldaten zu teilen.

15. Verfahren nach Anspruch 12, wobei das Verifizieren (640) der gemeinsam zu nutzenden Zieldaten das Bestimmen umfasst, dass die gemeinsam zu nutzenden Zieldaten verifiziert sind, wenn die erste Zufallsbitfolge mit der zweiten Zufallsbitfolge identisch ist.

## Revendications

1. Appareil de partage de données, comprenant :
un premier générateur de données combinées (210) configuré pour générer des premières données combinées en combinant des données cibles à partager et une chaîne de bits aléatoires ;
un crypteur de données (220) configuré pour générer un texte chiffré pour les premières données combinées ;
un crypteur de clé (230) configuré pour générer un ou plusieurs textes chiffrés pour une clé de décryptage du texte chiffré pour les premières données combinées en utilisant une ou plusieurs clés publiques ;
un second générateur de données combinées (240) configuré pour générer des secondes données combinées en combinant le texte chiffré pour les premières données combinées, les un ou plusieurs textes chiffrés pour la clé de décryptage, et la chaîne de bits aléatoires ; et
un divulgateur de données (250) configuré pour divulguer les secondes données combinées à une ou plusieurs entités pour partager les données cibles à partager.

2. Appareil selon la revendication 1, dans lequel le crypteur de données (220) est configuré pour générer le texte chiffré pour les premières données combinées en utilisant un algorithme de cryptage basé sur une clé symétrique et la clé de décryptage est identique à une clé de cryptage utilisée pour générer le texte chiffré pour les premières données combinées.

3. Appareil selon la revendication 1, dans lequel les une ou plusieurs clés publiques sont des clés publiques de chacune des une ou plusieurs entités.

4. Appareil selon la revendication 1, dans lequel le second générateur de données combinées (240) est configuré pour générer une signature électronique pour les secondes données combinées en utilisant une clé secrète et le divulgateur de données (250) est configuré pour divulguer les secondes données combinées et la signature électronique aux une ou plusieurs entités.

5. Procédé de partage de données, comprenant les étapes consistant à :
générer (510) des premières données combinées en combinant des données cibles à partager et une chaîne de bits aléatoires ;
générer (520) un texte chiffré pour les premières données combinées ;
générer (530) un ou plusieurs textes chiffrés pour une clé de décryptage du texte chiffré pour les premières données combinées en utilisant une ou plusieurs clés publiques ;
générer (540) des secondes données combinées en combinant le texte chiffré pour les premières données combinées, les un ou plusieurs textes chiffrés pour la clé de décryptage, et la chaîne de bits aléatoires ; et
la divulgation (550) des secondes données combinées à une ou plusieurs entités pour partager les données cibles à partager.

6. Procédé selon la revendication 5, dans lequel la génération (520) du texte chiffré pour les premières données combinées comprend la génération du texte chiffré pour les premières données combinées en utilisant un algorithme de cryptage basé sur une clé symétrique, et la clé de décryptage est identique à une clé de cryptage utilisée pour générer le texte chiffré pour les premières données combinées, et les une ou plusieurs clés publiques sont des clés publiques de chacune des une ou plusieurs entités.

7. Procédé selon la revendication 5, dans lequel la génération (540) des secondes données combinées comprend la génération d'une signature électronique pour les secondes données combinées en utilisant une clé secrète et la divulgation des secondes données combinées comprend la divulgation des secondes données combinées et de la signature électronique aux une ou plusieurs entités.

8. Appareil de partage de données, comprenant :
un acquéreur de données (310) configuré pour acquérir des secondes données combinées dans lesquelles un texte chiffré pour des premières données combinées dans lesquelles des données cibles à partager et une première chaîne de bits aléatoires sont combinées, un ou plusieurs textes chiffrés pour une clé de décryptage du texte chiffré pour les premières données combinées, et une seconde chaîne de bits aléatoires sont combinés ;
un décrypteur de clé (320) configuré pour utiliser une clé secrète pour décrypter un texte chiffré crypté en utilisant une clé publique qui correspond à la clé secrète parmi les un ou plusieurs textes chiffrés pour la clé de décryptage et acquérir la clé de décryptage ;
un décrypteur de données (330) configuré pour utiliser la clé de décryptage acquise pour décrypter le texte chiffré pour les premières données combinées et acquérir les données cibles à partager et la première chaîne de bits aléatoires ; et
un vérificateur de données (340) configuré pour vérifier les données cibles à partager sur la base de la première chaîne de bits aléatoires et de la seconde chaîne de bits aléatoires.

9. Appareil selon la revendication 8, dans lequel l'acquéreur de données est configuré pour acquérir les secondes données combinées et une signature électronique pour les secondes données combinées et vérifier la signature électronique pour les secondes données combinées en utilisant une clé publique d'une entité qui a divulgué les secondes données combinées.

10. Appareil selon la revendication 8, dans lequel les un ou plusieurs textes chiffrés pour la clé de décryptage sont des textes chiffrés cryptés en utilisant des clés publiques de chacune des entités pour partager les données cibles à partager.

11. Appareil selon la revendication 8, dans lequel le vérificateur de données est configuré pour déterminer que les données cibles à partager sont vérifiées lorsque la première chaîne de bits aléatoires est identique à la seconde chaîne de bits aléatoires.

12. Procédé de partage de données, comprenant les étapes consistant à :
acquérir (610) des secondes données combinées dans lesquelles un texte chiffré pour des premières données combinées dans lesquelles des données cibles à partager et une première chaîne de bits aléatoires sont combinées, un ou plusieurs textes chiffrés pour une clé de décryptage du texte chiffré pour les premières données combinées, et une seconde chaîne de bits aléatoires sont combinés ;
utiliser une clé secrète pour décrypter (620) un texte chiffré crypté en utilisant une clé publique qui correspond à la clé secrète parmi les un ou plusieurs textes chiffrés pour la clé de décryptage et acquérir la clé de décryptage ;
décrypter (630) le texte chiffré pour les premières données combinées en utilisant la clé de décryptage acquise et acquérir les données cibles à partager et la première chaîne de bits aléatoires ; et
vérifier (640) les données cibles à partager sur la base de la première chaîne de bits aléatoires et de la seconde chaîne de bits aléatoires.

13. Procédé selon la revendication 12, dans lequel l'acquisition (610) des secondes données combinées comprend l'acquisition des secondes données combinées et d'une signature électronique pour les secondes données combinées et la vérification de la signature électronique pour les secondes données combinées en utilisant une clé publique d'une entité qui a divulgué les secondes données combinées.

14. Procédé selon la revendication 12, dans lequel les un ou plusieurs textes chiffrés pour la clé de décryptage sont des textes chiffrés cryptés en utilisant des clés publiques de chacune des une ou plusieurs entités pour partager les données cibles à partager.

15. Procédé selon la revendication 12, dans lequel la vérification (640) des données cibles à partager comprend la détermination que les données cibles à partager sont vérifiées lorsque la première chaîne de bits aléatoires est identique à la seconde chaîne de bits aléatoires.
